# EUROPEAN PATENT APPLICATION

(11) **EP 4 654 440 A1**
(43) Date of publication of application: **26.11.2025**
(21) Application number: 24738590.9
(22) Date of filing: 04.02.2024
(51) Int. Cl.: H02K 3/28, H02K 3/12, H02K 3/50, H02K 1/16, H02K 1/12

(54) **STATOR OF FLAT WIRE ELECTRIC MOTOR**

(30) Priority: 09.02.2023 CN 202310084214; 15.02.2023 CN 202310118219; 17.02.2023 CN 202310128292
(71) Applicant: Atomdrive Technology (Jiangsu) Co., Ltd., Suzhou, Jiangsu 215300 (CN)
(72) Inventor: ZHENG, Guanghui, Suzhou, Jiangsu 215300 (CN); ZHANG, Ling, Suzhou, Jiangsu 215300 (CN); ZHAO, Peizhen, Suzhou, Jiangsu 215300 (CN); ZHENG, Jinze, Suzhou, Jiangsu 215300 (CN)
(74) Representative: Lorenz Seidler Gossel Part. mbB
(86) International application number: PCT/CN2024/075872
(87) International publication number: WO 2024/146659

(57) **Abstract**

Provided in the present application is a stator of a flat wire electric motor. The number of winding slots per pole per phase is three, the number of layers formed in each slot is 2M, each phase of winding comprises two branches, each branch comprises three U-shaped sub-conductors, each sub-conductor is inserted into two adjacent layers, slot positions occupied by the three sub-conductors of each conductor group on the same side in the circumferential direction are respectively defined as a unit phase first slot, a unit phase second slot and a unit phase third slot, and two legs of each of the three sub-conductor of each conductor group are respectively inserted into a unit phase first slot-a unit phase first slot, a unit phase second slot-a unit phase third slot, and a unit phase third slot-a unit phase second slot, or the unit phase first slot-the unit phase second slot, the unit phase second slot-the unit phase second slot, and the unit phase third slot-the unit phase third slot of adjacent layers and adjacent phases. The stator of a flat wire electric motor provided in the present application has a compact structure, low manufacturing costs and a good operation performance.

## Description

### CROSS REFERENCE TO RELATED APPLICATION

The present application claims the priority of the Invention Patent Application No. 202310084214.0, entitled "STATOR OF FLAT WIRE ELECTRIC MOTOR", filed in China on February 9, 2023, the priority of the Invention Patent Application No. 202310118219.0, entitled "STATOR OF FLAT WIRE ELECTRIC MOTOR AND FLAT WIRE ELECTRIC MOTOR", filed in China on February 15, 2023, and the priority of the Invention Patent Application No. 202310128292.6 entitled "STATOR OF FLAT WIRE ELECTRIC MOTOR", filed in China on February 17, 2023. The entire contents of the above prior applications are incorporated herein by reference.

### TECHNICAL FIELD

The present application relates to the field of electric motors, and specifically to a stator of a flat wire electric motor using flat wires as windings.

### BACKGROUND

Taking electric motors for new energy vehicles as an example, motor stators using flat wires as windings have a higher copper fill factor, which can improve the power density of the electric motor.

However, the arrangement flexibility of flat wire windings is poorer compared to round wire windings. How to arrange flat wire windings according to the requirements of various motor performances, so that the winding structure is simple, the manufacturing cost is low, and the electric motor has good working performance (such as larger torque or smaller harmonic interference), is an urgent problem to be solved in the art.

Especially for flat wire windings with a number of slots per pole per phase q of 3, a pole number 2P that is an even multiple of 3, and 2 parallel branches, the winding methods in the prior art are complicated. For example, the outlet ends of each branch are widely spaced in the circumferential direction of the stator (even up to 180°), which makes the arrangement of busbars complicated; or one of the end portions of the winding occupies a large space, which makes the installation of the rotor have certain limitations.

### SUMMARY

To solve the above problems, the present application provides a stator of a flat wire electric motor.

According to one aspect of the present application, it is to provide a stator of a flat wire electric motor, including a stator core and a flat wire stator winding, wherein:
the number of winding slots per pole per phase of the stator is 3, the number of poles of the stator is an even multiple of 3, the number of layers formed by the flat wire stator winding in the winding slots is 2M, wherein M is an integer greater than 1; the flat wire stator winding includes three-phase windings, each phase of the flat wire stator winding includes 2 branches, each of the branches includes a plurality of conductor groups, and each of the conductor groups includes 3 U-shaped sub-conductors, wherein,
two legs of each of the sub-conductors are inserted into two adjacent layers, and all legs of the 3 sub-conductors of each of the conductor groups located on a same circumferential side are inserted into three consecutive winding slots, wherein:
   slot positions occupied by the 3 sub-conductors of the each of the conductor groups on the same circumferential side are defined as a unit-phase first slot, a unit-phase second slot, and a unit-phase third slot, respectively, and then the two legs of the 3 sub-conductors of the each of the conductor groups are inserted into the unit-phase first slot-the unit-phase first slot, the unit-phase second slot-the unit-phase third slot, the unit-phase third slot-the unit-phase second slot, or the unit-phase first slot the unit-phase second slot, the unit-phase second slot-the unit-phase first slot, and the unit-phase third slot-the unit-phase third slot of adjacent layers and adjacent phases, respectively, and
   in the per pole per phase, wherein:
      the sub-conductors fully occupy each layer of three consecutive slots; or,
      the sub-conductors occupy three consecutive winding slots in odd layers and three consecutive winding slots in even layers; and when observed along an axial direction of the stator core, slot positions of the odd layers are aligned in a circumferential direction of the stator core, slot positions of the even layers are aligned in the circumferential direction, and the winding slots occupied by the sub-conductors in adjacent even layers and odd layers are staggered by one slot position in the circumferential direction; or,
      the slots occupied by the sub-conductors occupy three consecutive inner winding slots in M layers located on a radially inner side, and three consecutive outer winding slots in M layers located on a radially outer side, and the three inner winding slots and the three outer winding slots are staggered by one slot position in the circumferential direction.

According to at least one implementation mode, the flat wire stator winding in each of the branches satisfies at a welding end that:
a welding pair formed by two adjacent welding legs is located in a same layer at only one position, and the rest are all located in adjacent layers,
and the two welding legs of the welding pair located in the adjacent layers both belong to the unit-phase first slot, or both belong to the unit-phase second slot, or both belong to the unit-phase third slot.

According to at least one implementation mode, the two welding legs of the welding pair located in the same layer belong to the unit-phase first slot-the unit-phase second slot, respectively, or belong to the unit-phase first slot-the unit-phase third slot, respectively, or belong to the unit-phase second slot-the unit-phase third slot, respectively.

According to at least one implementation mode, with a welding position of the welding pair located in the same layer as a node, when observed in the circumferential direction of the stator core following a welding series sequence of the sub-conductors, circumferential winding sequences of the sub-conductors before and after the node are opposite.

According to at least one implementation mode, spans of the 3 sub-conductors of each of the conductor groups are 7, 8, and 9, respectively, or 8, 9, and 10, respectively, or 9, 10, and 11, respectively.

According to at least one implementation mode, in a case where the slots occupied by the sub-conductors occupy three consecutive inner winding slots in *M* layers located on a radially inner side, and three consecutive outer winding slots in the *M* layers located on a radially outer side, and the three inner winding slots and the three outer winding slots are staggered by one slot position in the circumferential direction, wherein:
when M is an odd number, spans of the sub-conductors of the conductor groups spanning an M^{th} layer and an (M+1)^{th} layer are different from spans of the sub-conductors of the conductor groups spanning other adjacent layers.

According to at least one implementation mode, a span between the two welding legs of the welding pair located in the same layer is 8 in one branch and 10 in the other branch, or,
a span between the two welding legs of the welding pair located in the same layer is 7 in one branch and 11 in the other branch.

According to at least one implementation mode, an outlet end and a lead end of each of the branches are both located in a same layer.

According to at least one implementation mode, the outlet end and the lead end of each of the branches are both located in a radially innermost layer, or both located in a radially outermost layer.

According to at least one implementation mode, the two branches are connected in series, or the two branches are connected in parallel.

The stator of the flat wire electric motor provided according to the present application has a compact structure, a low manufacturing cost, and good working performance.

### BRIEF DESCRIPTION OF THE DRAWINGS

FIG. 1 is a schematic diagram of a stator according to a first embodiment of the present application.
FIG. 2 is a schematic diagram of a possible two-branch three-phase winding connected in a star-shape configuration.
FIG. 3 is a schematic diagram of a possible two-branch three-phase winding connected in a delta-shape configuration.
FIG. 4 is a schematic diagram of a flat wire stator winding according to the first embodiment of the present application.
FIG. 5 is a schematic diagram of one phase of a winding according to the first embodiment of the present application.
FIG. 6 is a front view schematic diagram of one sub-conductor according to the first embodiment of the present application.
FIG. 7 is a top view schematic diagram of the sub-conductor shown in FIG. 6.
FIG. 8 and FIG. 9 are front view and top view schematic diagrams of sub-conductors with different spans according to the first embodiment of the present application.FIG. 10 is a layered schematic diagram of one winding slot of a stator core according to the first embodiment of the present application.
FIG. 11 is a schematic diagram of arrangement of sub-conductors in slots for one phase of a winding according to the first embodiment.
FIG. 12 and FIG. 13 are schematic diagrams of a welding chain path of sub-conductors of one branch corresponding to FIG. 11.
FIG. 14 is a schematic diagram of a welding chain path of sub-conductors of the other branch corresponding to FIG. 11.
FIG. 15 is a schematic diagram of arrangement of sub-conductors in slots for one phase of a winding according to a second embodiment.
FIG. 16 is a schematic diagram of welding chain paths of sub-conductors of two branches corresponding to FIG. 15.
FIG. 17 is a schematic diagram of arrangement of sub-conductors in slots for one phase of a winding according to a third embodiment.
FIG. 18 is a schematic diagram of welding chain paths of sub-conductors of two branches corresponding to FIG. 17.
FIG. 19 is a schematic diagram of arrangement of sub-conductors in slots for one phase of a winding according to a fourth embodiment.
FIG. 20 is a schematic diagram of welding chain paths of sub-conductors of two branches corresponding to FIG. 19.
FIG. 21 is a schematic diagram of arrangement of sub-conductors in slots for one phase of a winding according to a fifth embodiment.
FIG. 22 is a schematic diagram of welding chain paths of sub-conductors of two branches corresponding to FIG. 21.
FIG. 23 is a schematic diagram of arrangement of sub-conductors in slots for one phase of a winding according to a sixth embodiment.
FIG. 24 is a schematic diagram of welding chain paths of sub-conductors of two branches corresponding to FIG. 23.
FIG. 25 is a schematic diagram of arrangement of sub-conductors in slots for one phase of a winding according to a seventh embodiment.
FIG. 26 is a schematic diagram of welding chain paths of sub-conductors of two branches corresponding to FIG. 25.
FIG. 27 is a schematic diagram of arrangement of sub-conductors in slots for one phase of a winding according to an eighth embodiment.
FIG. 28 is a schematic diagram of welding chain paths of sub-conductors of two branches corresponding to FIG. 27.
FIG. 29 is a schematic diagram of arrangement of sub-conductors in slots for one phase of a winding according to a ninth embodiment.
FIG. 30 is a schematic diagram of welding chain paths of sub-conductors of two branches corresponding to FIG. 29.
FIG. 31 is a schematic diagram of arrangement of sub-conductors in slots for one phase of a winding according to a tenth embodiment.
FIG. 32 is a schematic diagram of welding chain paths of sub-conductors of two branches corresponding to FIG. 31.
FIG. 33 is a schematic diagram of arrangement of sub-conductors in slots for one phase of a winding according to an eleventh embodiment.
FIG. 34 is a schematic diagram of welding chain paths of sub-conductors of two branches corresponding to FIG. 33.
FIG. 35 is a schematic diagram of arrangement of sub-conductors in slots for one phase of a winding according to a twelfth embodiment.
FIG. 36 is a schematic diagram of welding chain paths of sub-conductors of two branches corresponding to FIG. 35.
FIG. 37 is a schematic diagram of arrangement of sub-conductors in slots for one phase of a winding according to a thirteenth embodiment.
FIG. 38 is a schematic diagram of welding chain paths of sub-conductors of two branches corresponding to FIG. 37.
FIG. 39 is a schematic diagram of arrangement of sub-conductors in slots for one phase of a winding according to a fourteenth embodiment.
FIG. 40 is a schematic diagram of welding chain paths of sub-conductors of two branches corresponding to FIG. 39.
FIG. 41 is a schematic diagram of arrangement of sub-conductors in slots for one phase of a winding according to a fifteenth embodiment.
FIG. 42 is a schematic diagram of welding chain paths of sub-conductors of two branches corresponding to FIG. 41.
FIG. 43 is a schematic diagram of arrangement of sub-conductors in slots for one phase of a winding according to a sixteenth embodiment.
FIG. 44 is a schematic diagram of welding chain paths of sub-conductors of two branches corresponding to FIG. 43.
FIG. 45 is a schematic diagram of arrangement of sub-conductors in slots for one phase of a winding according to a seventeenth embodiment.
FIG. 46 is a schematic diagram of welding chain paths of sub-conductors of two branches corresponding to FIG. 45.

### DETAILED DESCRIPTION OF THE EMBODIMENTS

Exemplary embodiments of the present application are described below with reference to the accompanying drawings. It should be understood that these specific descriptions are only used to teach those skilled in the art how to implement the present application, and are not intended to exhaust all feasible ways of the present application, nor to limit the scope of the present application.

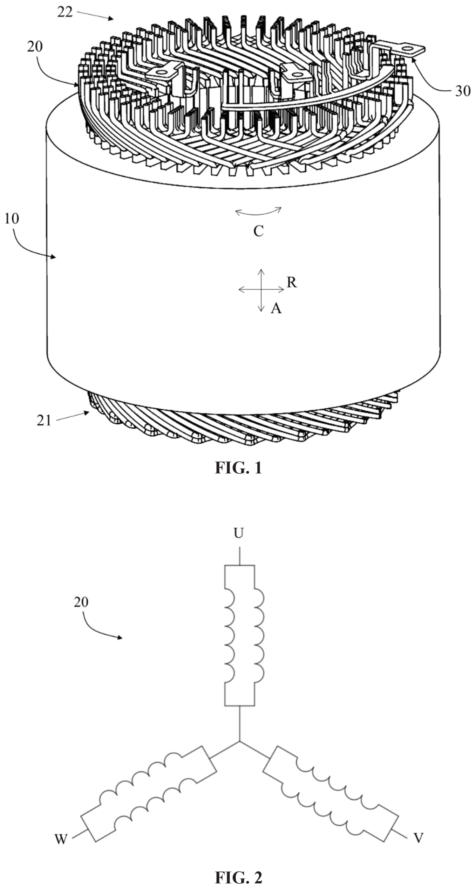

Unless otherwise specified, with reference to FIG. 1, A denotes the axial direction of the stator, R denotes the radial direction of the stator, and C denotes the circumferential direction of the stator.

The stator according to the present application includes a stator core 10, a flat wire stator winding 20 (hereinafter also referred to as winding 20), and an outlet copper bar 30.

The inner circumference of the stator core 10 is formed with winding slots (hereinafter also referred to as slots) extending along the axial direction A. The number of slots per pole per phase q is 3, and the number of poles 2P of the stator is an even multiple of 3 (the pole pair number P is an integer multiple of 3). In the present embodiment, the number of poles 2P=6, so the total number of winding slots is 54. It should be understood that in other possible embodiments, the number of winding slots will also change accordingly with the different numbers of poles 2P.

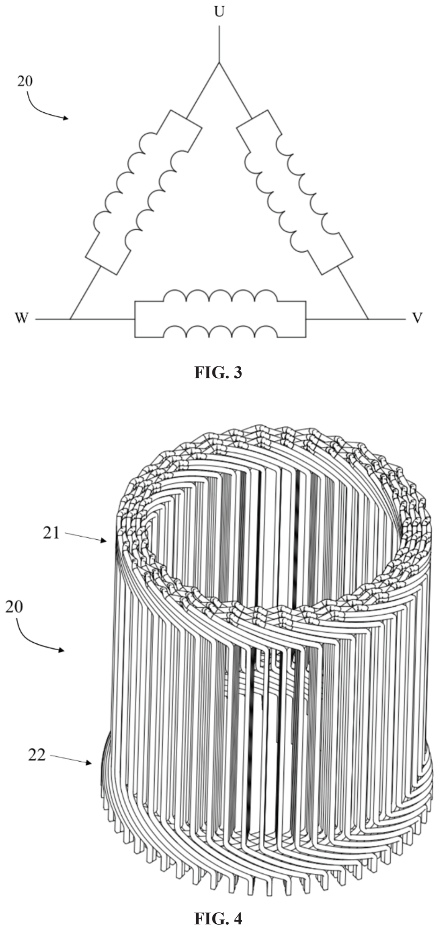

As shown in FIG. 2 and FIG. 3, each phase winding includes 2 parallel branches. The three-phase winding may, for example, be connected in a star-shape configuration as shown in FIG. 2, or in a delta-shape configuration as shown in FIG. 3.

The windings in the winding slots are distributed in an even number of layers in the radial direction R. The legs of the winding shown in FIG. 4 are formed into 6 layers. It should be understood that in other possible embodiments, the winding may also be, for example, 4 layers, 8 layers, etc.

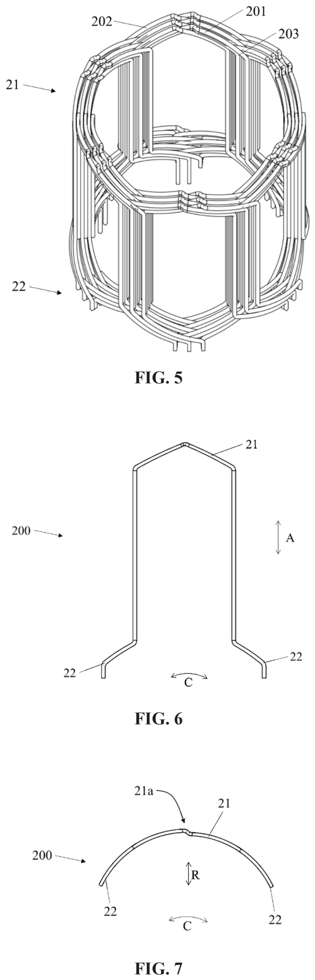

With reference to FIG. 5, the winding 20 of each phase includes a plurality of conductor groups. Each conductor group includes a plurality of sub-conductors 200.

With reference to FIG. 6, each sub-conductor 200 is generally U-shaped, with one end in the axial direction A connected to form a crown end 21, and the other end branched to form a welding end 22. The two legs of each sub-conductor 200 extending in the axial direction A are used to be inserted into the winding slots.

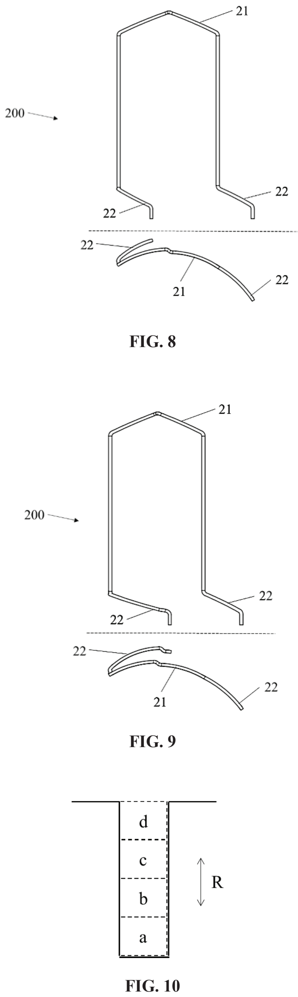

FIG. 7 shows a top view schematic diagram of the sub-conductor 200. Since each sub-conductor 200 spans layers, that is, the two legs of each sub-conductor 200 are located in adjacent layers, a fold 21a is formed at the crown end 21 of the sub-conductor 200 in the present embodiment, and this fold enables the two legs of the sub-conductor 200 to be staggered in the radial direction R. Layer spanning also ensures that the sub-conductor 200, especially the sub-conductor 200 located in the radially innermost layer, does not occupy excessive radial space, thereby enabling the winding 20 to have a larger inner diameter at the end, facilitating the installation of the rotor. FIG. 8 and FIG. 9 show another two types of sub-conductors with different spans. It should be understood that the present application does not limit the specific bending structure of the sub-conductor.

### First Embodiment

Next, with reference to FIG. 10 to FIG. 14, the stator according to the first embodiment of the present application is introduced by taking a stator with a 4-layer structure formed in the slots as an example. For convenience of description, taking one phase, for example, the U phase, as an example, the arrangement of sub-conductors 200 is described in detail.

In the following description, the different layers in the winding slot are denoted by lowercase letters a, b, c, and d, which respectively represent the 1st, 2nd, 3rd, and 4th layers counted from the radially outer side to the radially inner side. It should be understood that the layers in the winding slot are a virtual concept. Such layers are formed by the stacking of the legs of multiple sub-conductors 200. When no sub-conductors 200 are arranged in the slot, there is no layered structure in the slot.

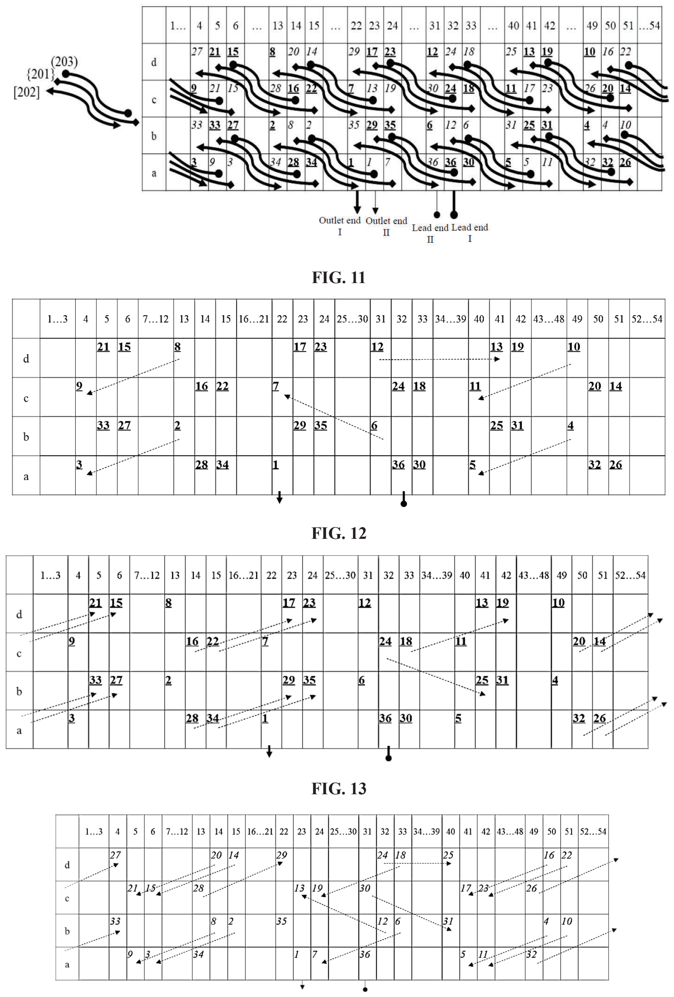

With reference to FIG. 11, in the present embodiment, the winding 20 of each phase includes 12 conductor groups, and each conductor group includes 3 sub-conductors 200.

Also with reference to FIG. 5, according to the different distances (hereinafter referred to as spans) between the two legs of each sub-conductor 200, the sub-conductors 200 are divided into a first conductor 201, a second conductor 202, and a third conductor 203. The span is measured by the difference in the slot position numbers in the circumferential direction C between the two winding slots into which the two legs of the sub-conductor 200 are inserted. The first conductor 201 has the largest span, the second conductor 202 has a medium span, and the third conductor 203 has the smallest span.

In the present embodiment, the spans of the first conductor 201, the second conductor 202, and the third conductor 203 are 10, 9, and 8, respectively.

Returning to FIG. 11, the 3 sub-conductors of each conductor group are inserted closely, that is, the legs of the 3 sub-conductors located on the same circumferential side are inserted into 3 consecutive winding slots. When observed along the circumferential direction C of the stator core 10, the sub-conductors 200 within each conductor group are arranged in the order of the winding slots into which their legs on one side are inserted as follows: the second conductor 202, the first conductor 201, and the third conductor 203.

Three slot positions occupied by the 3 sub-conductors of each conductor group on the same circumferential side in a certain layer are defined as a group of unit phases. For example, in FIG. 11, slots 4 to 6 of a layer d belong to one group of unit phases, and slots 13 to 15 of a layer c belong to another group of unit phases. The three slots in a group of unit phases are sequentially: a unit-phase first slot, a unit-phase second slot, and a unit-phase third slot. For example, the slot 4 of the layer d belongs to the unit-phase first slot, and the slot 13 of the layer c also belongs to the unit-phase first slot.

According to the winding scheme provided by the present application, the two legs of the 3 sub-conductors of each conductor group are inserted into the unit-phase first slot (the first leg of the first sub-conductor) the unit-phase first slot (the second leg of the first sub-conductor), the unit-phase second slot (the first leg of the second sub-conductor)-the unit-phase third slot (the second leg of the second sub-conductor), and the unit-phase third slot (the first leg of the third sub-conductor)-the unit-phase second slot (the second leg of the third sub-conductor) of adjacent layers and adjacent phases, respectively.

It is worth noting that according to the winding method provided by the present application, these 3 sub-conductors 200 can also have other arrangement orders. For example, in the sixth embodiment below, the two legs of the 3 sub-conductors of each conductor group are inserted into the unit-phase first slot (the first leg of the first sub-conductor)-the unit-phase second slot (the second leg of the first sub-conductor), the unit-phase second slot (the first leg of the second sub-conductor)-the unit-phase first slot (the second leg of the second sub-conductor), the unit-phase third slot (the first leg of the third sub-conductor)-the unit-phase third slot (the second leg of the third sub-conductor) of adjacent layers and adjacent phases, respectively.

The arrangement also satisfies that when observed along the axial direction A, the conductor groups distributed in different layers are aligned in the circumferential direction. In other words, in each pole and each phase, the sub-conductors fully occupy each layer of three consecutive slots. For example, in the winding of this phase (such as the U phase) shown in FIG. 11, the sub-conductors fully fill slots 4, 5, and 6 in the first pole, fully fill slots 13, 14, and 15 in the second pole, ..., and fully fill slots 49, 50, and 51 in the sixth pole.

According to the above rules, the positions of each conductor group in each slot and each layer can be determined. The specific path of each branch, i.e., the series connection order of each sub-conductor 200 in each branch, is realized by selecting appropriate adjacent legs of adjacent sub-conductors 200 for electrical connection (for example, welding the two legs at the welding end 22 in the present embodiment).

FIG. 12 and FIG. 13 show the path of the welding end of one of the branches of this phase, and for the sake of clarity, the path of the welding end of the entire branch is shown in two separate figures.

In FIG. 11 to FIG. 13, the underlined and bold numerical serial numbers represent the routing order of the first branch, and the non-underlined and italic numerical serial numbers represent the routing order of the second branch. The column number and row number where each numerical serial number is located respectively indicate the slot number and layer number into which each leg of each sub-conductor is inserted. For example, numerical serial numbers 1, 2, 3, and 4 (hereinafter, the numerical serial number x is also referred to as leg x) are located in slot 22, layer a; slot 13, layer b; slot 4, layer a; and slot 49, layer b respectively, indicating that the four consecutive legs in the series order are located in slot 22, layer a; slot 13, layer b; slot 4, layer a; and slot 49, layer b respectively. These four legs belong to the first leg of the 1st second conductor 202, the second leg of the 1st second conductor 202, the first leg of the 2nd second conductor 202, and the second leg of the 2nd second conductor 202, respectively. The second leg of the 1st second conductor 202 and the first leg of the 2nd second conductor 202 are connected together by welding at the welding end 22.

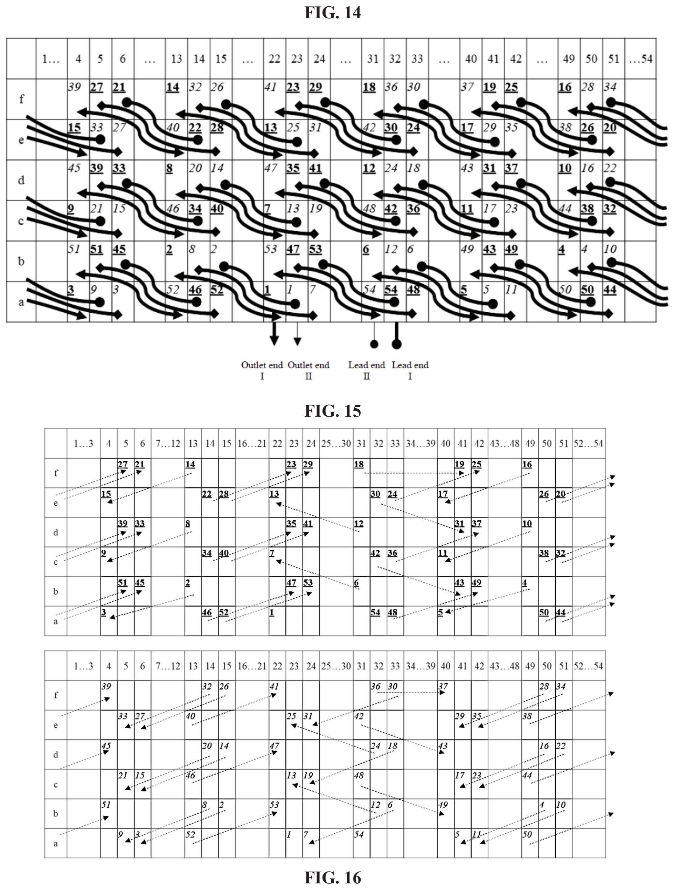

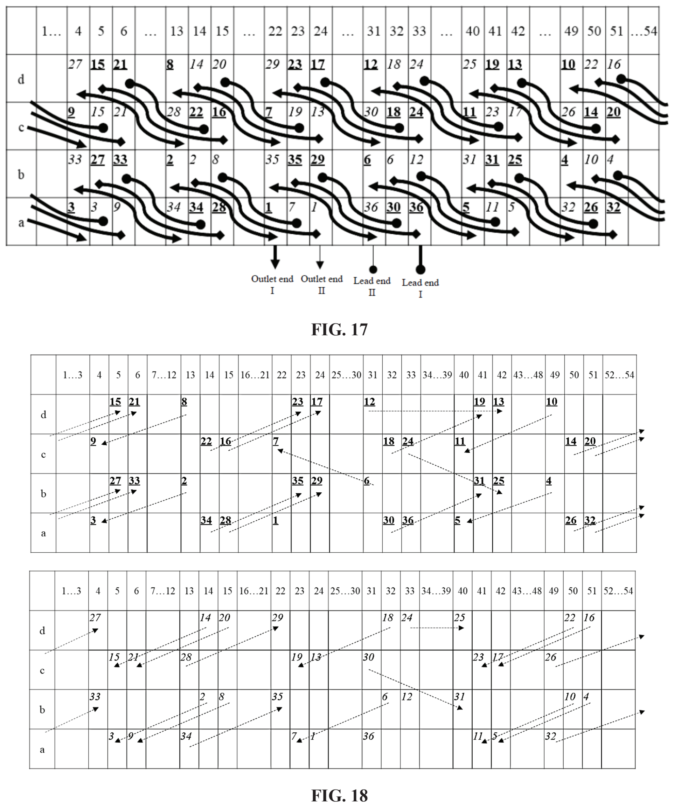

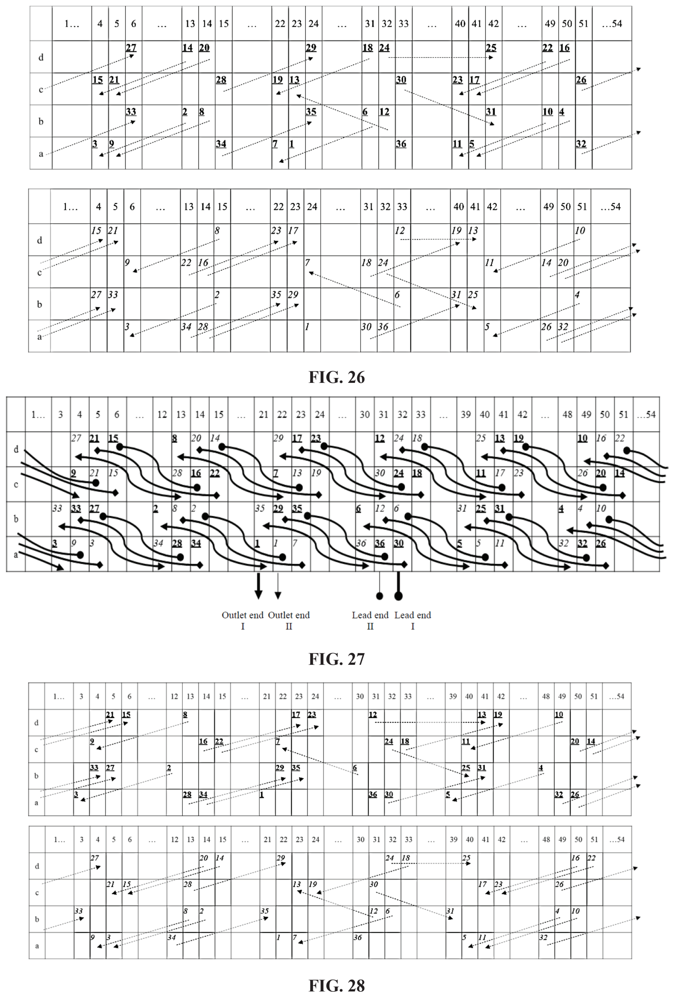

In each branch, the winding at the welding end satisfies:
First, a welding pair formed by two adjacent welding legs is located in a same layer at only one position (for example, in FIG. 12, a leg 12 and a leg 13 that are welded together are both located in layer d), and the rest are all located in adjacent layers.
Second, the two welding legs of the welding pair located in the same layer belong to the unit-phase first slot-the unit-phase second slot, respectively, or belong to the unit-phase first slot-the unit-phase third slot, respectively, or belong to the unit-phase second slot-the unit-phase third slot, respectively. For example, in FIG. 12, the leg 12 and the leg 13 of the first branch belong to the unit-phase first slot and the unit-phase second slot, respectively; and for another example, in FIG. 14, a leg 24 and a leg 25 of the second branch belong to the unit-phase second slot and the unit-phase first slot, respectively. In the scheme to be introduced in the third embodiment below (with reference to FIG. 18), the leg 12 and the leg 13 of the first branch belong to the unit-phase first slot and the unit-phase third slot, respectively, and the leg 24 and the leg 25 of the second branch belong to the unit-phase third slot and the unit-phase first slot, respectively. For another example, in the seventh embodiment shown in FIG. 26, the leg 24 and the leg 25 of the first branch belong to the unit-phase second slot and the unit-phase third slot, respectively, and the leg 12 and the leg 13 of the second branch belong to the unit-phase third slot and the unit-phase second slot, respectively.
Third, the two welding legs of the welding pair located in the adjacent layers both belong to the unit-phase first slot, or both belong to the unit-phase second slot, or both belong to the unit-phase third slot. For example, in FIG. 12, except for the leg 12 and the leg 13 located in the same layer, all other welded legs located in adjacent layers belong to the unit-phase first slot. For another example, in the welding chain shown in FIG. 13, the welded legs either both belong to the unit-phase second slot or both belong to the unit-phase third slot.

The reason why the series connection order of adjacent welding legs of adjacent sub-conductors belonging to the same branch (hereinafter also referred to as the welding chain) is displayed in two separate figures, FIG. 12 and FIG. 13, is to enable readers to more clearly identify the path of the welding chain. Starting from a leg 2, the welding chain first extends in the first circumferential direction (the direction in which the slot numbers decrease in the figure, which can be defined as the clockwise direction, for example); and it extends to leg 6 to complete a full circle of coiling, and at this time, it is necessary to change the layer-spanning direction, from spanning from the layer b to the layer a to spanning from the layer b to the layer c. It is worth noting that the welding legs spanning layers generally occur between the 2N^{th} layer and the (2N-1)^{th} layer, and a layer span between the 2N^{th} and (2N+1)^{th} layers occurs only after completing a full circumferential traversal. In FIG. 12 and FIG. 13, if the layer a is defined as the 1st layer, the welding legs spanning layers generally occur between the 2nd and 1st layers, or between the 4th and 3rd layers; a layer span between the 2nd and 3rd layers occurs only after completing a full circumferential traversal.

When the welding chain sequentially coils from the layer at the extreme end of one radial side (for example, the layer a or the 1st layer) to the layer at the extreme end of the other radial side, completing a spiral coiling in one circumferential direction, a same-layer welding pair appears, and a reverse circumferential coiling occurs at the same-layer welding pair. That is, in Fig. 12, when the welding chain extends to a leg 11 in the aforementioned clockwise direction, the other leg of the sub-conductor to which the leg 11 belongs, i.e., the leg 12, will be connected to the leg 13 in the counterclockwise direction.

Next, with reference to FIG. 13, the welding pairs after the leg 13 all extend in the counterclockwise direction. Therefore, it can be summarized as follows: with a welding position of the welding pair located in the same layer as a node, when observed in the circumferential direction following a welding series sequence of the sub-conductors, circumferential winding sequences of the sub-conductors 200 before and after the node are opposite.

FIG. 14 shows the series order of the welding pairs of another branch in the present embodiment. The same-layer welding pair in this branch is leg 24 and leg 25, which belong to the unit-phase second slot and the unit-phase first slot, respectively.

The different unit phase slots selected for the legs of the same-layer welding pairs and non-same-layer welding pairs result in different spans between the same-layer welding pairs and non-same-layer welding pairs. All non-same-layer welding pairs have equal spans, which is 9 in the present embodiment. In the present embodiment, the span of the same-layer welding pair in the first branch is 10, and the span of the same-layer welding pair in the second branch is 8.

Next, the winding paths of the two branches in the present embodiment are recorded in detail.

The arrangement of the two legs of each sub-conductor 200 in different slots and layers is represented by symbols similar to the following:
first conductor 201: {*a-*b};
second conductor 202: [*a-*b];
third conductor 203: (*a-*b);
where * represents the slot number, and a/b represents the layer number in the slot.

For example, {6a-50b} indicates that the two legs of the first conductor 201 (with a span of 10) are inserted into layer a of slot 6 and layer b of slot 50, respectively; [22a-13b] indicates that the two legs of the second conductor 202 (with a span of 9) are inserted into layer a of slot 22 and layer b of slot 13, respectively; and (40d-48c) indicates that the two legs of the third conductor 203 (with a span of 8) are inserted into layer d of slot 40 and layer c of slot 48, respectively.

In the present embodiment, the layer a of the slot 22 is taken as the outlet end of the first branch, and the introduction starts from here.

First branch:
outlet end-[22a-13b]-[4a-49b]-[40a-31b]-
[22c-13d]-[4c-49d]-[40c-31d]~
{41d-51c}-(6d-14c)-{23d-33c}-(42d-50c)-{5d-15c}-(24d-32c)-
{41b-51a}-(6b-14a)-{23b-33a}-(42b-50a)-{5b-15a}-(24b-32a)-lead end

It should be understood that, for the convenience of the reader in observing the placement positions of the sub-conductors 200 between different adjacent layers and for observing the different arrangements before and after the same-layer welding pair (indicated by ~), the above is intentionally displayed in separate lines. In fact, the sub-conductors 200 in different lines are still connected in series.

Second branch:
outlet end-(23a-15b)-{6a-50b}-(41a-33b)-{24a-14b}-(5a-51b)-{42a-32b}-
(23c-15d)-{6c-50d}-(41c-33d)-{24c-14d}-(5c-51d)-{42c-32d}~
[40d-49c]-[4d-13c]-[22d-31c]-
[40b-49a]-[4b-13a]-[22b-31a]-lead end

It can be intuitively seen from FIG. 11 that, according to this routing mode, the outlet ends of the two branches are located in adjacent slots, and similarly, the lead ends of the two branches are located in adjacent slots. Moreover, the outlet ends and lead ends of the two branches are located in adjacent poles. In this way, the ends of all branches are located within a very small range in the circumferential direction C, making the structure of the outlet copper bars very compact and material-saving.

### Second Embodiment

The second embodiment of the present application is described with reference to FIGS. 15 to 16. The second embodiment is a variation of the first embodiment. Components with the same or similar structures or functions as those in the first embodiment are labeled with the same reference numerals, and specific descriptions of these components are omitted.

The main difference between the present embodiment and the first embodiment lies in the number of layers in the winding slot, which is 6 in the present embodiment. Since other routing rules are similar to those of the first embodiment, only the routing sequences of the two branches are briefly recorded below.

First branch:
terminal-[22a-13b]-[4a-49b]-[40a-31b]-
[22c-13d]-[4c-49d]-[40c-3 1d]-
[22e-13f]-[4e-49f]-[40e-31f]~
{4lf-51e}-(6f-14e)-{23f-33e}-(42f-50e)-{5f-15e}-(24f-32e)-
{41d-51c}-(6d-14c)-{23d-33c}-(42d-50c)-{5d-15c}-(24d-32c)-
{41b-51a}-(6b-14a)-{23b-33a}-(42b-50a)-{5b-15a}-(24b-32a)-lead end

Second branch:
terminal-(23a-15b)-{6a-50b}-(41a-33b)-{24a-14b}-(5a-51b)-{42a-32b}-
(23c-15d)-{6c-50d}-(41c-33d)-{24c-14d}-(5c-51d)-{42c-32d}-
(23e-15f)-{6-501}-(41e-33f)-{24e-141}-(5e-51f)-{42e-32f}~
[40f-49e]-[4f-13e]-[22f-31e]-
[40d-49c]-[4d-13c]-[22d-31c]-
[40b-49a]-[4b-13a]-[22b-31a]-lead end

### Third Embodiment

The third embodiment of the present application is described with reference to FIGS. 17 to 18. The third embodiment is a variation of the first embodiment. The main difference between the present embodiment and the first embodiment lies in that, in the present embodiment, the two welded legs of the welding pair located in the same layer belong to the unit-phase first slot-the unit-phase third slot, respectively. The spans of the same-layer welding pairs corresponding to this connection method are 11 or 7.

First branch:
outlet end-[22a-13b]-[4a-49b]-[40a-31b]-
[22c-13d]-[4c-49d]-[40c-31d]~
(42d-50c)-{5d-15c}-(24d-32c)-{41d-51c}-(6d-14c)-{23d-33c}-
(42b-50a)-{5b-15a}-(24b-32a)-{41b-51a}-(6b-14a)-{23b-33a}-lead end

Second branch:
outlet end-{24a-14b}-(5a-51b)-{42a-32b}-(23a-15b)-{6a-50b}-(41a-33b)-
{24c-14d}-(5c-51d)-{42c-32d}-(23c-15d)-{6c-50d}-(41c-33d)~
[40d-49c]-[4d-13c]-[22d-31c]-
[40b-49a]-[4b-13a]-[22b-31a]-lead end

According to this routing mode, the outlet ends of the two branches will be separated by one winding slot, and similarly, the lead ends of the two branches will be separated by one winding slot. However, the outlet ends and lead ends of the two branches are still located in adjacent poles, so the arrangement of the outlet copper bars remains compact and material-saving.

### Fourth Embodiment

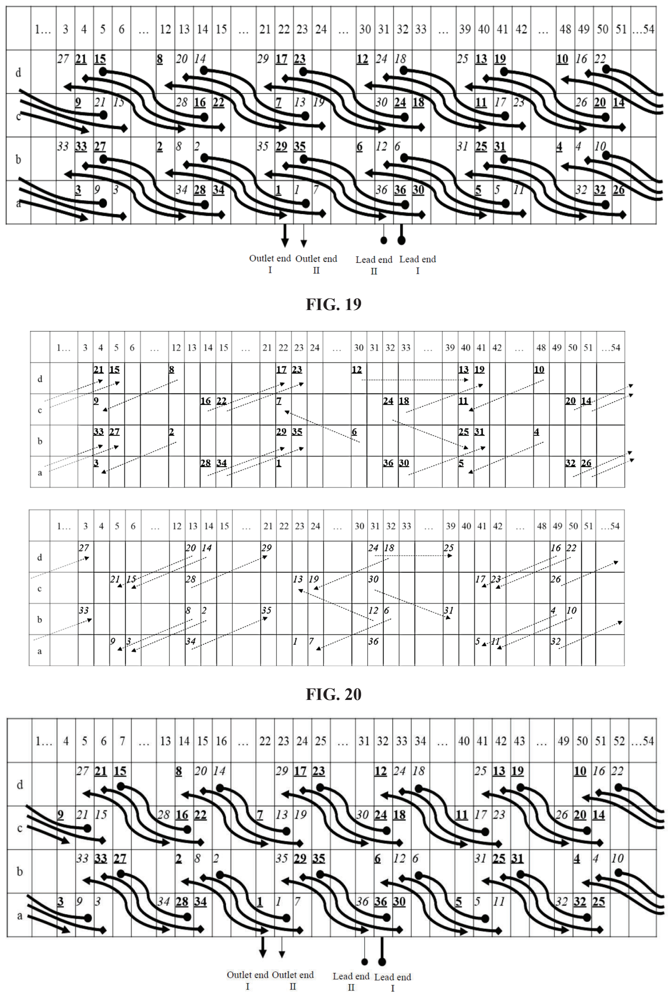

The fourth embodiment of the present application is described with reference to FIGS. 19 to 20. The fourth embodiment is a variation of the first embodiment. The main differences between the present embodiment and the first embodiment are as follows:
First, the sub-conductor 200 occupies three consecutive slots in the odd layers of each pole and each phase, and three consecutive slots in the even layers. When observed along the axial direction A of the stator core 10, the slot positions of the sub-conductor 200 in the odd layers of the same phase and the same pole are aligned in the circumferential direction C, the slot positions in the even layers of the same phase and the same pole are aligned in the circumferential direction C, and the slots of the adjacent even layers and odd layers are staggered by one slot position in the circumferential direction C. For example, the first pole of the U phase shown in FIG. 19 occupies slots 4, 5, and 6 in the odd layers (layer a and layer c), and slots 3, 4, and 5 in the even layers (layer b and layer d).

The staggered slot positions between adjacent layers for each pole and each phase in the circumferential direction C can reduce winding harmonics, thereby reducing NVH during motor operation.

Second, in the present embodiment, the spans of the first conductor 201, the second conductor 202, and the third conductor 203 are 11, 10, and 9, respectively. Except for the spans of the same-layer welding pairs, which are 10 or 8, the spans between the adjacent legs of adjacent conductors (i.e., the spans of the welding pairs) are all 8.

For the specific winding path, first branch:
terminal-[22a-12b]-[4a-48b]-[40a-30b]-
[22c-12d]-[4c-48d]-[40c-30d]~
{40d-51c}-(5d-14c)-{22d-33c}-(41d-50c)-{4d-15c}-(23d-32c)-
{40b-51a}-(5b-14a)-{22b-33a}-(41b-50a)-{4b-15a}-(23b-32a)-lead end

Second branch:
terminal-(23a-14b)-{6a-49b}-(41a-32b)-{24a-13b}-{5a-50b}-(42a-31b)-
(23c-14d)-{6c-49d}-(41c-32d)-{24c-13d}-{5c-50d}-(42c-31d)~
[39d-49c]-[3d-13c]-[21d-31c]-
[39b-49a]-[3b-13a]-[21b-31a]-lead end

### Fifth Embodiment

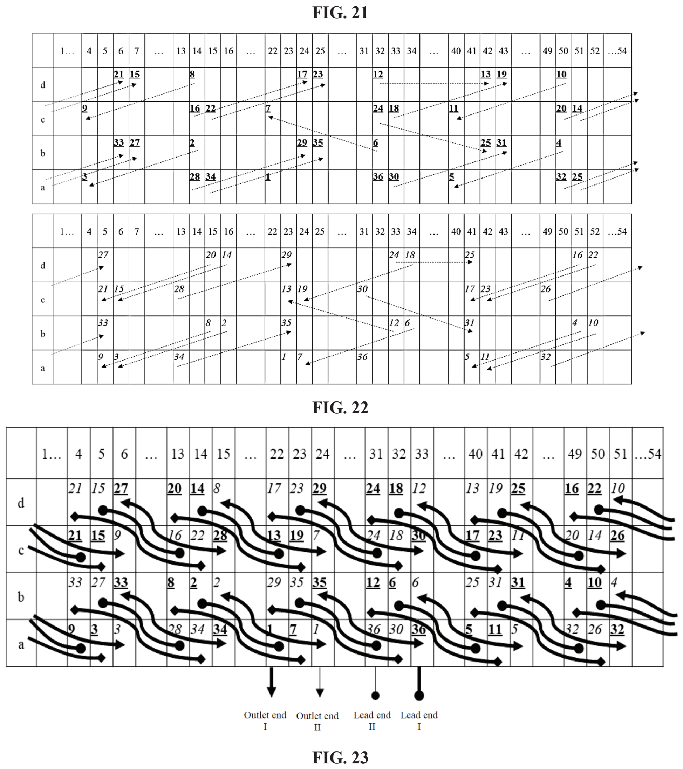

The fifth embodiment of the present application is described with reference to FIG. 21 and FIG. 22. The fifth embodiment is a variation of the first embodiment and the fourth embodiment.

The main difference between the present embodiment and the first embodiment lies in that, in the present embodiment, the spans of the first conductor 201, the second conductor 202, and the third conductor 203 are 9, 8, and 7, respectively. Except for the spans of the same-layer welding pairs, which are 10 or 8, the spans between the adjacent legs of adjacent conductors are all 10.

In terms of the staggering direction of the odd and even layers, the present embodiment is opposite to the fourth embodiment.

For the specific winding path, first branch:
terminal-[22a-14b]-[4a-50b]-[40a-32b]-
[22c-14d]-[4c-50d]-[40c-32d]~
{42d-51c}-(7d-14c)-{24d-33c}-(43d-50c)-{6d-15c}-(25d-32c)-
{42b-51a}-(7b-14a)-{24b-33a}-(43b-50a)-{6b-15a}-(25b-32a)-lead end

Second branch:
terminal-(23a-16b)-{6a-51b}-(41a-34b)-{24a-15b}-(5a-52b)-{42a-33b}-
(23c-16d)-{6c-51d}-(41c-34d)-{24c-15d}-(5c-52d)-{42c-33d}~
[41d-49c]-[5d-13c]-[23d-31c]-
[41b-49a]-[5b-13a]-[23b-31a]-lead end

### Sixth Embodiment

The sixth embodiment of the present application is described with reference to FIG. 23 to FIG. 24. The sixth embodiment is a variation of the first embodiment.

As mentioned earlier, the main difference between the present embodiment and the first embodiment lies in that the two legs of the 3 sub-conductors in each conductor group are inserted into the unit-phase first slot-the unit-phase second slot, the unit-phase second slot-the unit-phase first slot, and the unit-phase third slot-the unit-phase third slot of adjacent layers and adjacent phases, respectively. In the present embodiment, when observed along the circumferential direction C of the stator core 10, the sub-conductors 200 in each conductor group are arranged in the order of the winding slots they are inserted into as follows: the first conductor 201, the third conductor 203, and the second conductor 202.

The change in the arrangement order of each sub-conductor 200 brings about a change in the span between the adjacent legs of adjacent conductors at the same-layer welding pairs. In the present embodiment, the spans of the same-layer welding pairs are 11 or 7.

For the specific winding path, first branch:
terminal-(22a-14b)-{5a-49b}-(40a-32b)-{23a-13b}-(4a-50b)-{41a-31b}-
(22c-14d)-{5c-49d}-(40c-32d)-{23c-13d}-(4c-50d)-{41c-31d}~
[42d-51c]-[6d-15c]-[24d-33c]-
[42b-51a]-[6b-15a]-[24b-33a]-lead end

Second branch:
terminal-[24a-15b]-[6a-51b]-[42a-33b]-
[24c-15d]-[6c-51d]-[42c-33d]-
{40d-50c}-(5d-13c)-{22d-32c}-(41d-49c)-{4d-14c}-(23d-31c)-
{40b-50a} -(Sb-13a)- {22b-32a} -(41b-49a)-{4b-14a} -(23b-3 1a)-lead end

### Seventh Embodiment

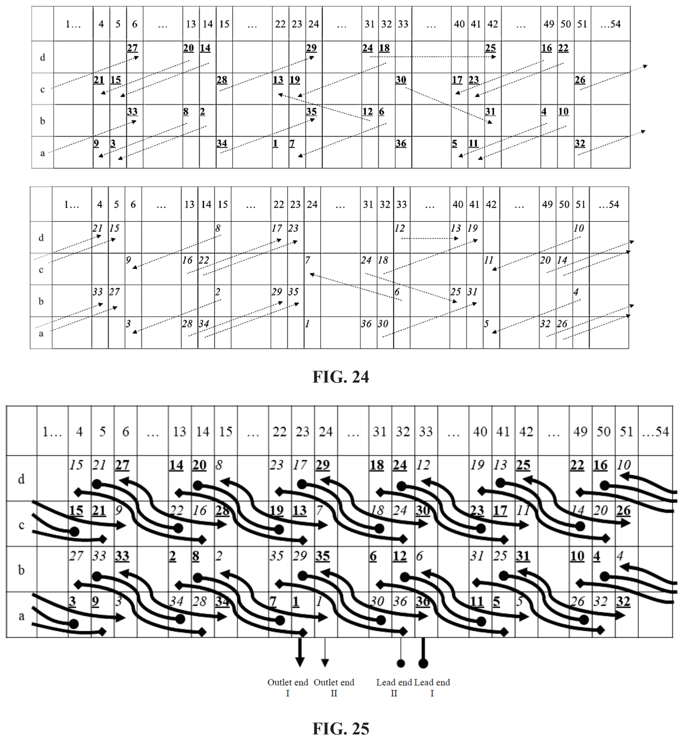

The seventh embodiment of the present application is described with reference to FIG. 25 and FIG. 26. The seventh embodiment is a variation of the first embodiment, the third embodiment, and the sixth embodiment.

The main differences between the present embodiment and the first embodiment are as follows:
First, for each branch of each phase, the two welding legs of the same-layer welding pair belong to the unit-phase second slot-the unit-phase third slot, respectively.
Second, the two legs of the 3 sub-conductors in each conductor group are inserted into the unit-phase first slot-the unit-phase second slot, the unit-phase second slot-the unit-phase first slot, and the unit-phase third slot the unit-phase third slot of adjacent layers and adjacent phases, respectively. When observed along the circumferential direction C of the stator core 10, the sub-conductors 200 in each conductor group are arranged in the order of the winding slots they are inserted into as follows: the first conductor 201, the third conductor 203, and the second conductor 202.

The simultaneous change of the above two rules results in that, adapting to this connection sequence, in the present embodiment, the spans between the same-layer welding pairs of the two branches are 10 and 8, respectively (the same as in the first embodiment). The spans of the welding pairs at other positions are all 9 (the same as in the first embodiment).

The specific routing sequences of the two branches are as follows:
First branch:
   outlet end-{23a-13b}-(4a-50b)-{41a-31b}-(22a-14b)-{5a-49b}-(40a-32b)-
   {23c-13d}-(4c-50d)-{41c-31d}-(22c-14d)-{5c-49d}-(40c-32d)~
   [42a-51b]-[6a-15b]-[24a-33b]-
   [42c-51d]-[6c-15d]-[24c-33d]-lead end
Second branch:
   outlet end-[24a-15b]-[6a-51b]-[42a-33b]-
   [24c-15d]-[6c-51d]-[42c-33d]~
   (4ld-49c)-{4d-14c}-(23d-31c)-{40d-50c}-(5d-13c)-{22d-32c}-
   (41b-49a)-{4b-14a}-(23b-31a)-{40b-50a}-(5b-13a)-{22b-32a}-lead end

### Eighth Embodiment

The eighth embodiment of the present application is described with reference to FIG. 27 and FIG. 28. The eighth embodiment is a variation of the first embodiment. The main differences between the present embodiment and the first embodiment are as follows:
First, in the case where the total number of layers is 2M (M = 2 and 2M = 4 in the present embodiment), the slots occupied by the sub-conductors 200 include three consecutive inner winding slots in the M layers located on the radially inner side, and three consecutive outer winding slots in the M layers located on the radially outer side. The three inner winding slots and the three outer winding slots are staggered by one slot position in the circumferential direction. It is worth noting that in the eighth to twelfth embodiments, M, which is half of the number of layers, is an even number.
Second, for the welding pairs spanning the M-th layer and the (M+1)-th layer (for example, the welding pairs spanning the 2nd layer and the 3rd layer, i.e., spanning layer b and layer c in the present embodiment), their spans are different from those of other non-same-layer welding pairs. It should be understood that the welding pairs spanning the M-th layer and the (M+1)-th layer still follow the routing mode that "the two welding legs of the welding pairs located in adjacent layers both belong to the unit-phase first slot, or both belong to the unit-phase second slot, or both belong to the unit-phase third slot". This is only caused by the circumferential staggering of the unit phase slots between the M-th layer and the (M+1)-th layer.

Specifically, the path of each sub-conductor 200 in the first branch is as follows:
outlet end-[21a-12b]-[3a-48b]-[39a-30b]=
[22c-13d]-[4c-49d]-[40c-31d]∼
{4ld-51c}-(6d-14c)-{23d-33c}-(42d-50c)-{5d-15c}-(24d-32c)=
{40b-50a}-(5b-13a)- {22b-32a}-(41b-49a)- {4b-14a}-(23b-31a)-lead end

In the above sequence, "=" is used to indicate a welding pair spanning the M-th layer and the (M+1)-th layer.

Second branch:
outlet end-(22a-14b)-{5a-49b}-(40a-32b)-{23a-13b}-(4a-50b)-{41a-31b}=
(23c-15d)-{6c-50d}-(41c-33d)-{24c-14d}-(5c-51d)-{42c-32d}~
[40d-49c]-[4d-13c]-[22d-31c]=
[39b-48a]-[3b-12a]-[21b-30a]-lead end

### Ninth Embodiment

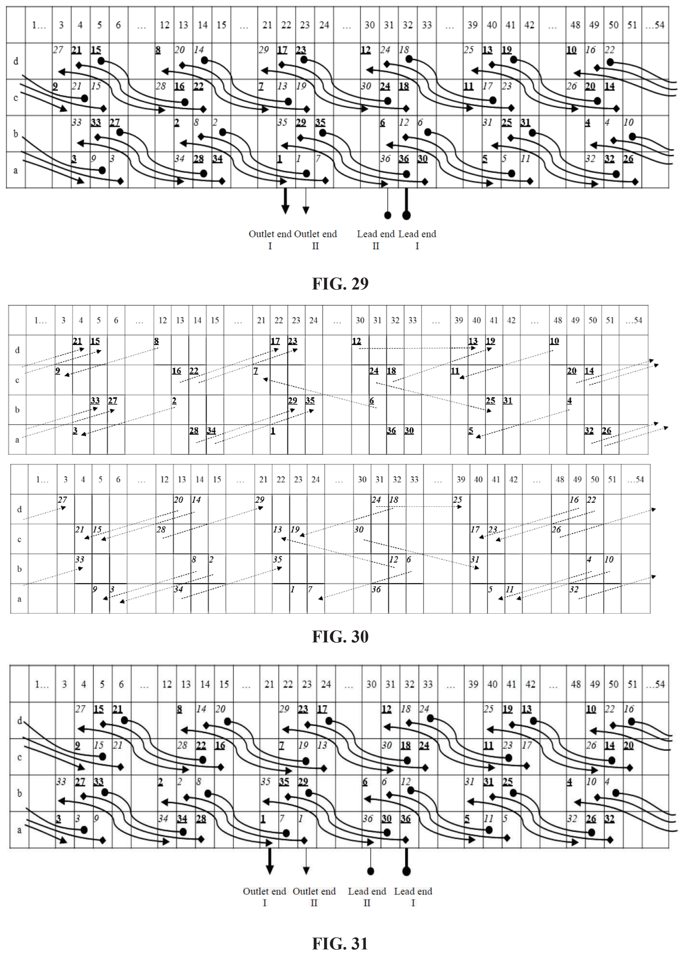

The ninth embodiment of the present application is described with reference to FIG. 29 and FIG. 30. The ninth embodiment is a variation of the eighth embodiment. The main difference between the present embodiment and the eighth embodiment lies in the different directions of slot position offset when the layer b and the layer c are staggered. This difference results in different spans of the welding pairs spanning the M-th layer and the (M+1)-th layer. Of course, the welding pairs spanning the M-th layer and the (M+1)-th layer still follow the routing mode that "the two welding legs of the welding pairs located in adjacent layers both belong to the unit-phase first slot, or both belong to the unit-phase second slot, or both belong to the unit-phase third slot".

Specifically, in the present embodiment, first branch:
outlet end-[22a-13b]-[4a-49b]-[40a-31b]=
[21c-12d]-[3c-48d]-[39c-30d]~
{40d-50c}-(5d-13c)-{22d-32c}-(41d-49c)-{4d-14c}-(23d-31c)=
{41b-5 1a} -(6b-14a)-{23b-33a}-(42b-50a)-{5b-15a} -(24b-32a)-lead end

Second branch:
outlet end-(23a-15b)-{6a-50b}-(41a-33b)-{24a-14b}-(5a-51b)-{42a-32b}=
(22c-14d)-{5c-49d}-(40c-32d)-{23c-13d}-(4c-50d)-{41c-31d}~
[39d-48c]-[3d-12c]-[21d-30c]=
[40b-49a]-[4b-13a]-[22b-31a]-lead end

### Tenth Embodiment

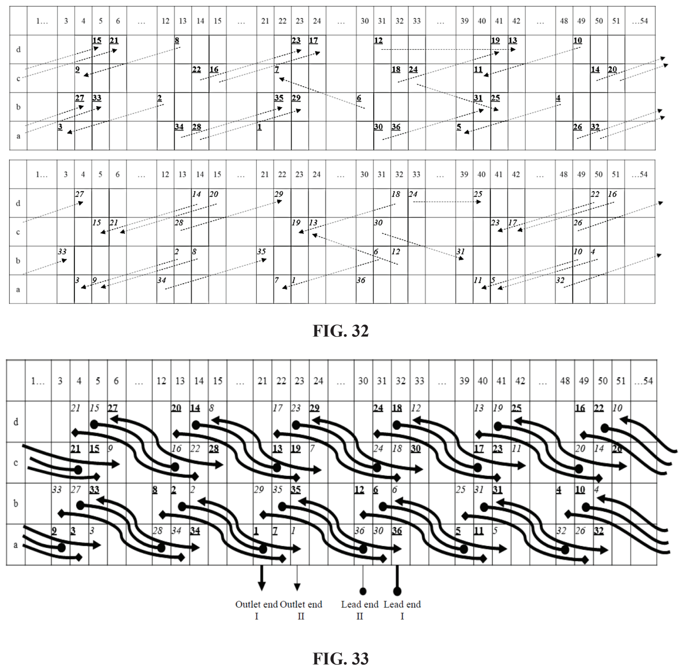

The tenth embodiment of the present application is described with reference to FIG. 31 and FIG. 32. The tenth embodiment is a variation of the eighth embodiment. The main difference between the present embodiment and the eighth embodiment (similar to the third embodiment) lies in that the two welding legs of the welding pairs located in the same layer belong to the unit-phase first slot-the unit-phase third slot, respectively. The spans of the same-layer welding pairs corresponding to this connection method are 11 or 7.

The specific routing sequences of the two branches are as follows:
First branch:
   outlet end-[21a-12b]-[3a-48b]-[39a-30b]=
   [22c-13d]-[4c-49d]-[40c-31d]~
   (42d-50c)-{5d-15c}-(24d-32c)-{41d-51c}-(6d-14c)-{23d-33c}=
   (41b-49a)-{4b-14a}-(23b-3 1a)-{40b-50a}-(5b-13a)-{22b-32a}-lead end
Second branch:
   outlet end-{23a-13b}-(4a-50b)-{41a-31b}-(22a-14b)- {5a-49b}-(40a-32b)=
   {24c-14d}-(5c-51d)-{42c-32d}-(23c-15d)-{6c-50d}-(41c-33d)~
   [40d-49c]-[4d-13c]-[22d-31c]=
   [39b-48a]-[3b-12a]-[21b-30a]-lead end

### Eleventh Embodiment

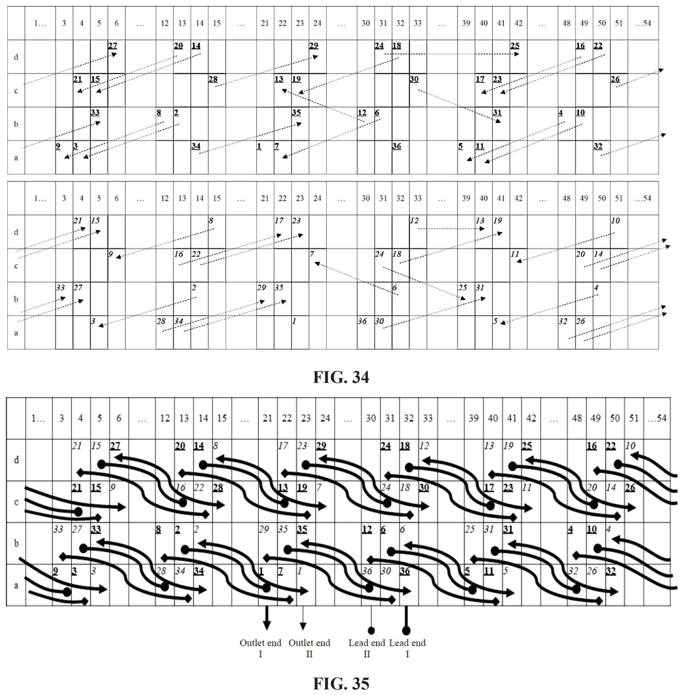

The eleventh embodiment of the present application is described with reference to FIG. 33 and FIG. 34. The eleventh embodiment is a variation of the eighth embodiment. Similar to the sixth embodiment, in the present embodiment, the two legs of the 3 sub-conductors in each conductor group are inserted into the unit-phase first slot-the unit-phase second slot, the unit-phase second slot-the unit-phase first slot, and the unit-phase third slot-the unit-phase third slot of adjacent layers and adjacent phases, respectively. In the present embodiment, when observed along the circumferential direction C of the stator core 10, the sub-conductors 200 in each conductor group are arranged in the order of the winding slots they are inserted into as follows: the first conductor 201, the third conductor 203, and the second conductor 202. The change in the arrangement order of each sub-conductor 200 brings about a change in the span between the adjacent legs of adjacent conductors at the same-layer welding pairs. In the present embodiment, the spans of the same-layer welding pairs are 11 or 7.

The specific routing sequences of the two branches are as follows:
First branch:
   outlet end-(21a-13b)-{4a-48b}-(39a-3 1b)-{22a-12b}-(3a-49b)-{40a-30b}=
   (22c-14d)-{5c-49d}-(40c-32d)-{23c-13d}-(4c-50d)-{41c-31d}~
   [42d-51c]-[6d-15c]-[24d-33c]=
   [41d-50c]-[5d-14c]-[23d-32c]-lead end
Second branch:
   outlet end-[23a-14b]-[5a-50b]-[41a-32b]=
   [24c-15d]-[6c-51d]-[42c-33d]~
   {40d-50c}-(5d-13c)-{22d-32c}-(41d-49c)-{4d-14c}-(23d-31c)=
   {39b-49a}-(4b-12a)-{21b-31a}-(40b-48a)-{3b-13a}-(22b-30a)-lead end

### Twelfth Embodiment

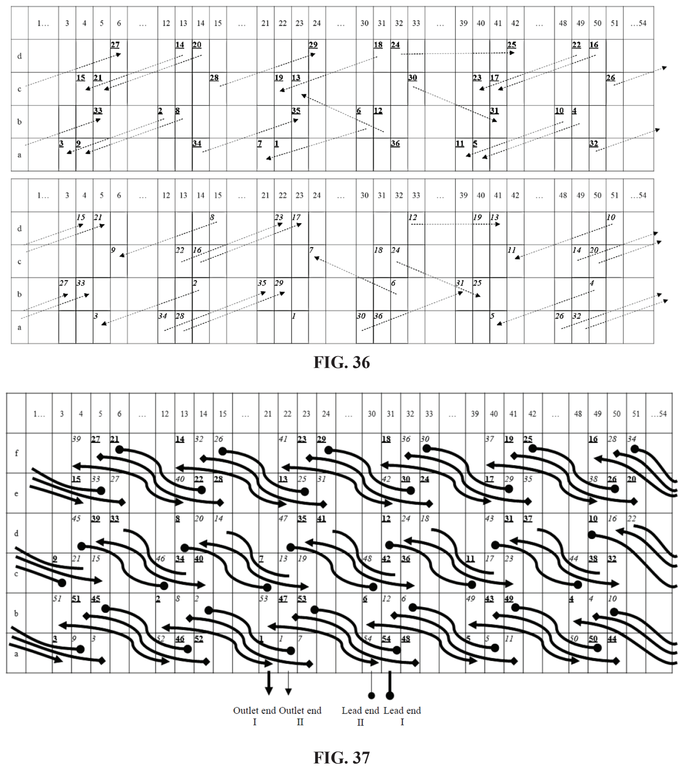

The twelfth embodiment of the present application is described with reference to FIG. 35 and FIG. 36. The twelfth embodiment is a variation of the eighth embodiment, and the present embodiment combines the variant features of the tenth and eleventh embodiments. On one hand, the two welding legs of the welding pairs located in the same layer belong to the unit-phase second slot-the unit-phase third slot, respectively; and on the other hand, the two legs of the 3 sub-conductors in each conductor group are inserted into the unit-phase first slot-the unit-phase second slot, the unit-phase second slot-the unit-phase first slot, and the unit-phase third slot-the unit-phase third slot of adjacent layers and adjacent phases, respectively.

The specific routing sequences of the two branches are as follows:
First branch:
   outlet end-{22a-12b}-(3a-49b)-{40a-30b}-(21a-13b)-{4a-48b}-(39a-31b)=
   {23c-13d}-(4c-50d)-{41c-31d}-(22c-14d)-{5c-49d}-(40c-32d)~
   [42d-51c]-[6d-15c]-[24d-33c]=
   [41b-50a]-[5b-14a]-[23b-32a]-lead end
Second branch:
   outlet end-[23a-14b]-[5a-50b]-[41a-32b]=
   [24c-15d]-[6c-51d]-[42c-33d]~
   (41d-49c)-{4d-14c}-(23d-31c)-{40d-50c}-(5d-13c)-{22d-32c}=
   (40b-48a)-{3b-13a}-(22b-30a)-{39b-49a}-(4b-12a)-{21b-31a}-lead end

### Thirteenth Embodiment

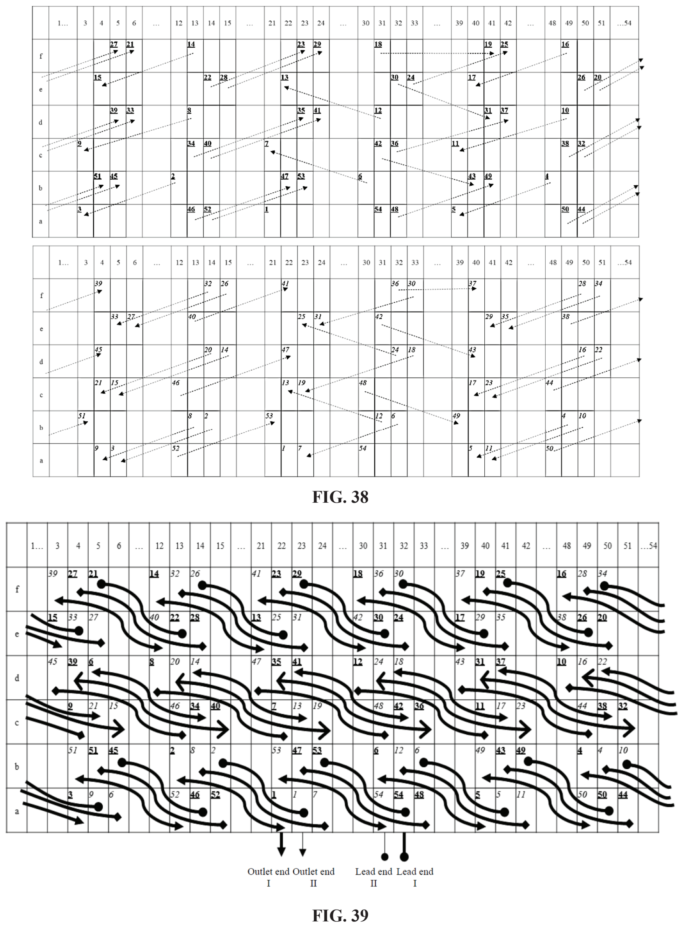

The thirteenth embodiment of the present application is described with reference to FIG. 37 and FIG. 38. The thirteenth embodiment is a variation of the eighth embodiment. The difference between the present embodiment and the eighth embodiment lies in that half of the number of layers, i.e., M, is an odd number (in the present embodiment, M = 3).

In the eighth to twelfth embodiments, since M is an even number, there is no case where the two legs of a U-shaped sub-conductor belong to the M-th layer and the (M+1)-th layer, respectively, and the staggering between the M-th layer and the (M+1)-th layer does not affect the span of a single U-shaped sub-conductor. However, in the present embodiment, there is a case where the two legs of a single U-shaped sub-conductor span the M-th layer and the (M+1)-th layer. Due to the circumferential staggering of these two layers, the span of this part of the U-shaped sub-conductors is different from that of the U-shaped sub-conductors located in other layers.

In the present embodiment, there are two types of conductor groups. The spans of the 3 sub-conductors in the conductor groups spanning the M-th layer and the (M+1)-th layer are 9, 8, and 7, respectively, while the spans of the 3 sub-conductors in the conductor groups spanning other adjacent layers are 10, 9, and 8, respectively. It is worth noting that these sub-conductors still follow the rule that the two legs of the 3 sub-conductors in each conductor group are inserted into the unit-phase first slot-the unit-phase first slot, the unit-phase second slot-the unit-phase third slot, and the unit-phase third slot-the unit-phase second slot of adjacent layers and adjacent phases, respectively.

The sub-conductor with the smallest span (7 in the present embodiment) is denoted by <*a-*b>, the sub-conductor with the second largest span (8 in the present embodiment) is denoted by (*a-*b), the sub-conductor with the third largest span (9 in the present embodiment) is denoted by [*a-*b], and the sub-conductor with the fourth largest span (10 in the present embodiment) is denoted by {*a-*b}.

Specifically, the path of each sub-conductor in the first branch is as follows:
outlet end-[21a-12b]-[3a-48b]-[39a-30b]-
(21c-13d)-(3c-49d)-(39c-31d)-
[22e-13f]-[4e-49f]-[40e-31f]~
{4lf-51e}-(6f-14e)-{23f-33e}-(42f-50e)-{5f-15e}-(24f-32e)-
[41d-50c]=<6d-13c>=[23d-32c]=<42d-49c>=[5d-14c]=<24d-31c>-
{40b-50a}-(5b-13a)-{22b-32a}-(41b-49a)-{4b-14a}-(23b-31a)-lead end

Second branch:
outlet end-(22a-14b)-{5a-49b}-(40a-32b)-{23a-13b}-(4a-50b)-{41a-31b}-
<22c-15d>=[5c-50d]=<40c-33d>=[23c-14d]=<4c-51d>=[41c-32d]-
(23e-15f)-{6e-50f}-(41e-33f)-{24e-14f}-(5e-51f)-{42e-32f}~
[40f-49e]-[4f-13e]-[22f-31e]-
(40d-48c)-(4d-12c)-(22d-30c)-
[39b-48a]-[3b-12a]-[21b-30a]-lead end

### Fourteenth Embodiment

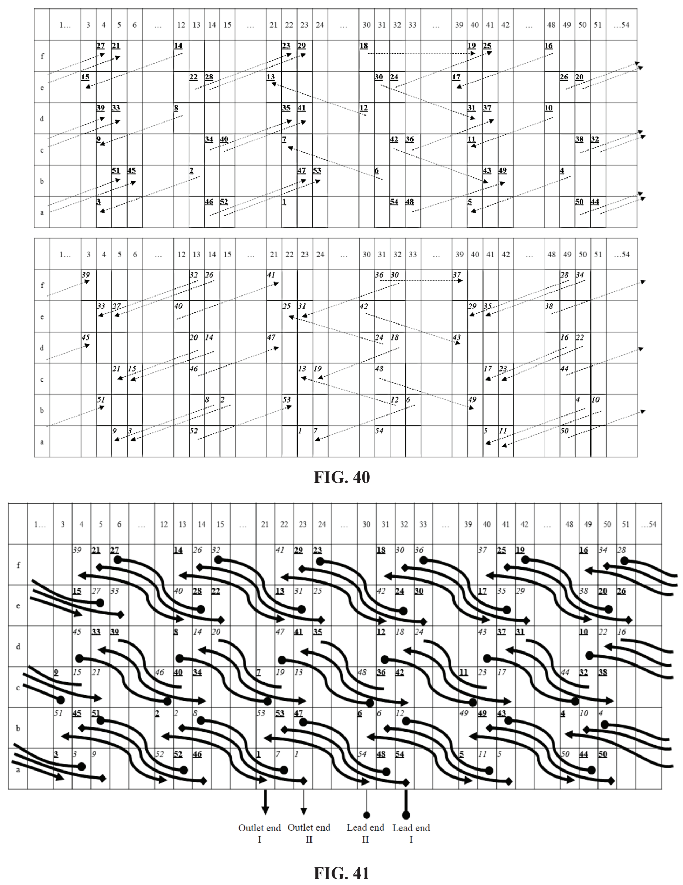

The fourteenth embodiment of the present application is described with reference to FIG. 39 and FIG. 40. The fourteenth embodiment is a variation of the thirteenth embodiment. The main difference between the present embodiment and the thirteenth embodiment lies in the different directions of slot position offset when the M-th layer and the (M+1)-th layer are staggered, which results in different spans of the 3 sub-conductors in the conductor groups spanning the M-th layer and the (M+1)-th layer, which are 11, 10, and 9 in the present embodiment.

Hereinafter, [*a-*b] is used to represent the sub-conductor with a span of 11. The pecific branch routing mode is as follows:
First branch:
   outlet end-[22a-13b]-[4a-49b]-[40a-31b]-
   {22c-12d}={4c-48d}-{40c-30d}-
   [21e-12f]-[3e-48f]-[39e-30f]~
   {40f-50e}-(5f-13e)-{22f-32e}-(41f-49e)-{4f-14e}-(23f-31e)-
   [40d-51c] =[5d-14c]= [22d-33c] =[41d-50c]= [4d-15c] =[23d-32c]-
   {41b-51a}-(6b-14a)-{23b-33a}-(42b-50a)-{5b-15a}-(24b-32a)-lead end
Second branch:
   outlet end-(23a-15b)-{6a-50b}-(41a-33b)-{24a-14b}-(5a-51b)-{42a-32b}-
   [23c-14d]= [6c-49d] =[41c-32d]= [24c-13d] =[5c-50d]= [42c-31d] -
   (22e-14f)-{5e-49f}-(40e-32f)-{23e-13f}-(4e-50f)-{41e-31f}~
   [39f-48e]-[3f-12e]-[21f-30e]-
   {39d-49c}={3d-13c}={21d-31c}-
   [40b-49a]-[4b-13a]-[22b-31a]-lead end

### Fifteenth Embodiment

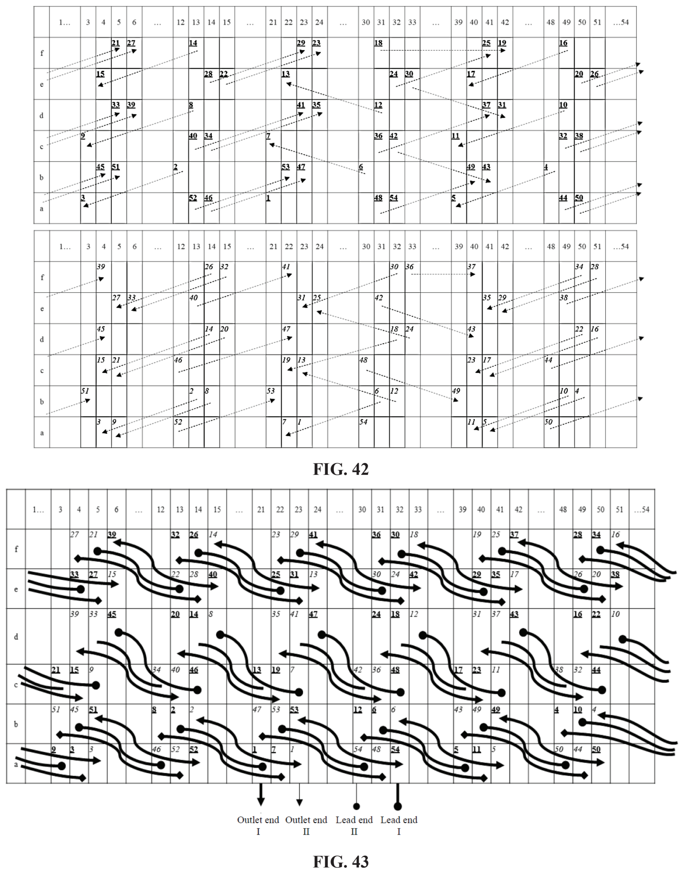

The fifteenth embodiment of the present application is described with reference to FIG. 41 and FIG. 42. The fifteenth embodiment is a variation of the thirteenth embodiment. The main difference between the present embodiment and the thirteenth embodiment is that the two welding legs of the welding pairs located in the same layer belong to the unit-phase first slot-the unit-phase third slot, respectively. Adapting to this connection sequence, in the present embodiment, the span of the same-layer welding pairs of one branch is 11, and the span of the same-layer welding pairs of the other branch is 7.

The specific routing sequences of the two branches are as follows:
First branch:
   outlet end-[21a-12b]-[3a-48b]-[39a-30b]-
   (21c-13d)=(3c-49d)=(39c-31d)-
   [22e-13f]-[4e-49f]-[40e-31f]∼
   (42f-50e)-{5f-15e}-(24f-32e)-{41f-51e}-(6f-14e)-{23f-33e}-
   <42d-49c>=[5d-14c]=<24d-31c>=[41d-50c]=<6d-13c>=[23d-32c]-
   (41b-49a)-{4b-14a}-(23b-31a)-{40b-50a}-(5b-13a)-{22b-32a}-lead end
Second branch:
   outlet end-{23a-13b}-(4a-50b)-{41a-31b}-(22a-14b)- {5a-49b}-(40a-32b)-
   [23c-14d]=<4c-51d>=[41c-32d]=<22c-15d>=[5c-50d]=<40c-33d>-
   {24e-14f}-(5e-5lf)-{42e-32f}-(23e-15f)-{6c-50f}-(41c-33f)~
   [40f-49e]-[4f-13e]-[22f-31e]-
   (40d-48c)=(4d-12c)=(22d-30c)-
   [39b-48a]-[3b-12a]-[21b-30a]-lead end

### Sixteenth Embodiment

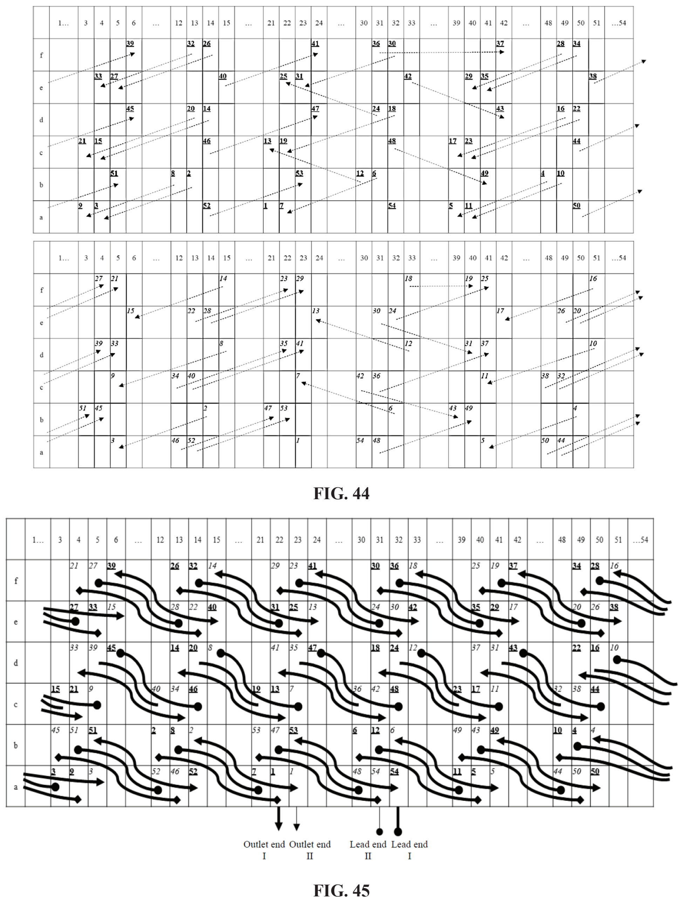

The sixteenth embodiment of the present application is described with reference to FIG. 43 and FIG. 44. The sixteenth embodiment is a variation of the thirteenth embodiment. The main differences between the present embodiment and the thirteenth embodiment are as follows:
First, in the present embodiment, the two legs of the 3 sub-conductors in each conductor group are inserted into the unit-phase first slot-the unit-phase second slot, the unit-phase second slot-the unit-phase first slot, and the unit-phase third slot-the unit-phase third slot of adjacent layers and adjacent phases, respectively.
Second, similar to the fifteenth embodiment, the two welding legs of the welding pairs located in the same layer belong to the unit-phase first slot-the unit-phase third slot, respectively.

The specific routing sequences of the two branches are as follows:
First branch:
   outlet end-(21a-13b)-{4a-48b}-(39a-31b)-{22a-12b}-(3a-49b)-{40a-30b}-
   <21c-14d>=[4c-49d]=<39c-32d>=[22c-13d]=<3c-50d>=[40c-31d]-
   (22e-14f)-{5e-49f} -(40e-32f)- {23e-13f} -(4e-50f)-{41e-31f}~
   [42f-51e]-[6f-15e]-[24f-33e]-
   (42d-50c)-(6d-14c)-(24d-32c)-
   [41b-50a]-[5b-14a]-[24b-32a]-lead end
Second branch:
   outlet end-[23a-14b]-[5a-50b]-[41a-32b]-
   (23c-15d)=(5c-51d)=(41c-33d)-
   [24e-15f]-[6e-51f]-[42e-33f]~
   {40f-50e}-(5f-13e)-{22f-32e}-(41f-49e)-{4f-14e}-(23f-31e)-
   [40d-49c]=<5d-12c>=[22d-31c]=<41d-48c>=[4d-13c]=<23d-30c>-
   {39b-49a}-(4b-12a)-{21b-31a}-(40b-48a)-{3b-13a}-(22b-30a)-lead end

### Seventeenth Embodiment

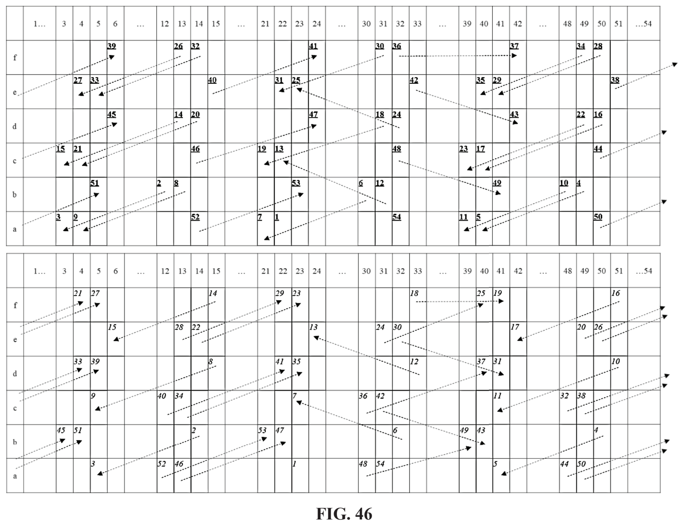

The seventeenth embodiment of the present application is described with reference to FIG. 45 and FIG. 46. The seventeenth embodiment is a variation of the sixteenth embodiment. The main difference between the present embodiment and the sixteenth embodiment lies in that the two welding legs of the welding pairs located in the same layer belong to the unit-phase first slot-the unit-phase second slot, respectively.

The specific routing sequences of the two branches are as follows:
First branch:
   outlet end-{22a-12b}-(3a-49b)-{40a-30b}-(21a-13b)-{4a-48b}-(39a-31b)-
   [22c-13d]=<3c-50d>=[40c-31d]=<21c-14d>=[4c-49d]=<39c-32d>-
   {23e-13f}-(4e-50f)-{41e-31f}-(22e-14f)-{5e-49f}-(40e-32f)~
   [42f Sle]-[6f 15e]-[24f 33e]-
   (42d-50c)=(6d-14c)=(24d-32c)-
   [41b-50a]-[5b-14a]-[23b-32a]-lead end
Second branch:
   outlet end-[23a-14b]-[5a-50b]-[41a-32b]-
   (23c-15d)=(5c-51d)=(41c-33d)-
   [24e-15f]-[6e-51f]-[42e-33f]~
   (41f-49e)-{4f-14e}-(23f-31e)-{40f-50e}-(5f-13e)-{22f-32e}-
   <41d-48c>=[4d-13c]=<23d-30c>=[40d-49c|=<5d-12>=[22d-31c]-
   (40b-48a)-{3b-13a}-(22b-30a)-{39b-49a}-(4b-12a)-{21b-31a}-lead end

It should be understood that the above embodiments and their aspects or features can be appropriately combined.

The present application has at least one of the following advantages:
(i) Each sub-conductor 200 spans two layers, so that the sub-conductor 200, especially the sub-conductor 200 located at the radially innermost side, does not occupy excessive radial space, thereby enabling the winding 20 to have a larger inner diameter at the end, facilitating the installation of the rotor.
(ii) The outlet ends and the lead ends of the windings of the two branches of each phase have a small interval in the circumferential direction C, making the structure compact and simple. Moreover, the branch windings are spatially symmetrical, and no loop current will be generated.
(iii) The present application provides various different embodiments for production and application. The routing mode where the slot positions of conductors per pole per phase are aligned in each layer in the circumferential direction can be selected as needed to obtain a larger torque; the routing mode where the slot positions of conductors per pole per phase are staggered between layers in the circumferential direction can also be selected to obtain a smaller harmonic influence; alternatively, the routing mode where the M layers on the radially inner side and the M layers on the radially outer side of the slot positions of conductors per pole per phase are staggered in the circumferential direction can be selected, which can reduce harmonic influence and noise.

The above are merely embodiments of the present application. The scope of protection of the present application is not limited to these specific embodiments, but is determined by the claims of the present application. For those skilled in the art, various modifications and changes can be made to the present application. Any modifications, equivalent substitutions, improvements, etc. made within the technical idea and principle of the present application shall be included within the scope of protection of the present application. For example:
(i) The outlet ends and the lead ends in the above embodiments may be interchanged;
(ii) In all the above embodiments, the outlet ends and lead ends are placed on the radially outermost layer, while the anti-twist nodes are placed on the radially innermost layer. However, this is not necessary. For example, the outlet ends and the lead ends may also be located on the radially innermost layer, with the anti-twist nodes on the radially outermost layer.
(iii) The slot numbers selected for each pole and each phase in the above embodiments may be translated integrally in the circumferential direction C.
(iv) For the connection of same-layer welding pairs, in addition to folding the welding ends of the sub-conductors to change the span between their legs and the legs of adjacent sub-conductors as shown in FIG. 6 to FIG. 9, other components (also referred to as busbars) can also be used to electrically connect the legs of adjacent sub-conductors.

## Claims

1. A stator of a flat wire electric motor, comprising a stator core (10) and a flat wire stator winding (20), wherein
the number of winding slots per pole per phase of the stator is 3, the number of poles (2P) of the stator is an even multiple of 3, the number of layers formed by the flat wire stator winding (20) in the winding slots is 2M, wherein M is an integer greater than 1, the flat wire stator winding (20) comprises three-phase windings, each phase of the flat wire stator winding (20) comprises 2 branches, each of the branches comprises a plurality of conductor groups, and each of the conductor groups comprises 3 U-shaped sub-conductors (200),
two legs of each of the sub-conductors (200) are inserted into two adjacent layers, and legs of the 3 sub-conductors (200) of each of the conductor groups located on a same circumferential side are inserted into 3 consecutive winding slots, and
slot positions occupied by the 3 sub-conductors of each of the conductor groups on the same circumferential side are defined as a unit-phase first slot, a unit-phase second slot, and a unit-phase third slot, respectively, and then the two legs of the 3 sub-conductors of each of the conductor groups are inserted into the unit-phase first slot-the unit-phase first slot, the unit-phase second slot-the unit-phase third slot, the unit-phase third slot-the unit-phase second slot, or the unit-phase first slot-the unit-phase second slot, the unit-phase second slot-the unit-phase first slot, and the unit-phase third slot-the unit-phase third slot of adjacent layers and adjacent phases, respectively, and
in each pole and each phase,
the sub-conductors (200) fully occupy each layer of three consecutive slots; or
the sub-conductors (200) occupy three consecutive winding slots in odd layers and three consecutive winding slots in even layers; and when observed along an axial direction (A) of the stator core (10), slot positions of the odd layers are aligned in a circumferential direction (C) of the stator core (10), slot positions of the even layers are aligned in the circumferential direction (C), and the winding slots occupied by the sub-conductors (200) in adjacent even layers and odd layers are staggered by one slot position in the circumferential direction (C); or
the slots occupied by the sub-conductors (200) occupy three consecutive inner winding slots in M layers located on a radially inner side, and three consecutive outer winding slots in M layers located on a radially outer side, and the three inner winding slots and the three outer winding slots are staggered by one slot position in the circumferential direction.

2. The stator of the flat wire electric motor according to claim 1, wherein the flat wire stator winding (20) in each of the branches satisfies at a welding end that:
a welding pair formed by two adjacent welding legs is located in a same layer at only one position, and the rest are all located in adjacent layers,
and the two welding legs of the welding pair located in the adjacent layers both belong to the unit-phase first slot, or both belong to the unit-phase second slot, or both belong to the unit-phase third slot.

3. The stator of the flat wire electric motor according to claim 2, wherein the two welding legs of the welding pair located in the same layer belong to the unit-phase first slot-the unit-phase second slot, respectively, or belong to the unit-phase first slot-the unit-phase third slot, respectively, or belong to the unit-phase second slot-the unit-phase third slot, respectively.

4. The stator of the flat wire electric motor according to claim 2, wherein with a welding position of the welding pair located in the same layer as a node, when observed in the circumferential direction of the stator core (10) following a welding series sequence of the sub-conductors (200), circumferential winding sequences of the sub-conductors (200) before and after the node are opposite.

5. The stator of the flat wire electric motor according to claim 1, wherein spans of the 3 sub-conductors (200) of each of the conductor groups are 7, 8, and 9, respectively, or 8, 9, and 10, respectively, or 9, 10, and 11, respectively.

6. The stator of the flat wire electric motor according to claim 5, wherein in a case where the slots occupied by the sub-conductors (200) occupy three consecutive inner winding slots in M layers located on a radially inner side, and three consecutive outer winding slots in M layers located on a radially outer side, and the three inner winding slots and the three outer winding slots are staggered by one slot position in the circumferential direction,
when M is an odd number, spans of the sub-conductors of the conductor groups spanning an M^{th} layer and an (M+1)^{th} layer are different from spans of the sub-conductors of the conductor groups spanning other adjacent layers.

7. The stator of the flat wire electric motor according to claim 2, wherein a span between the two welding legs of the welding pair located in the same layer is 8 in one branch and 10 in the other branch, or
a span between the two welding legs of the welding pair located in the same layer is 7 in one branch and 11 in the other branch.

8. The stator of the flat wire electric motor according to claim 1, wherein an outlet end and a lead end of each of the branches are both located in a same layer.

9. The stator of the flat wire electric motor according to claim 8, wherein the outlet end and the lead end of each of the branches are both located in a radially innermost layer, or both located in a radially outermost layer.

10. The stator of the flat wire electric motor according to claim 1, wherein the two branches are connected in series, or the two branches are connected in parallel.
